# FASCICULE DE BREVET EUROPEEN

(11) **EP 2 347 471 B1**
(45) Date de publication et mention de la délivrance du brevet: **23.03.2016**
(21) Numéro de dépôt: 09755999.1
(22) Date de dépôt: 09.10.2009
(51) Int. Cl.: H01R 11/15, H02G 1/02, H01R 13/639, B25B 5/10, B25B 5/16, H01R 4/64

(54) **DISPOSITIF DE MISE A LA TERRE D'UN CONDUCTEUR ÉLECTRIQUE D'UNE LIGNE ÉLECTRIQUE AÉRIENNE**
EINRICHTUNG ZUR ERDUNG EINES ELEKTRISCHEN LEITERS EINES ÜBERLANDKABELS
DEVICE FOR GROUNDING AN ELECTRICAL CONDUCTOR OF AN OVERHEAD POWER LINE

(30) Priorité: 14.10.2008 FR 0856957; 11.02.2009 LU 91524; 19.02.2009 WO PCT/FR2009/050266
(43) Date de publication de la demande: 27.07.2011
(73) Titulaire: Fameca, 68170 Rixheim (FR)
(72) Inventeur: SCHEIDT, Frédéric, F-68440 Dietwiller (FR); HARLAY, Jean-Baptiste, F-68100 Mulhouse (FR); PHILIP, Michel, F-68120 Pfastatt (FR)
(74) Mandataire: Rhein, Alain
(86) Numéro de dépôt international: PCT/FR2009/051928
(87) Numéro de publication internationale: WO 2010/043801

(56) Documents cités:
- EP-A- 0 688 694
- FR-A- 2 167 245
- FR-A- 2 719 422
- US-A- 2 144 837
- US-A- 4 912 949
- US-B1- 7 052 334

## Description

La présente invention a trait à un dispositif pour mettre à la terre un conducteur électrique que comporte une ligne électrique aérienne.

Cette invention concerne le domaine de la fabrication des dispositifs utilisés dans le cadre de la maintenance des installations électriques, plus particulièrement celui de la fabrication des dispositifs conçus pour assurer la mise à la terre des conducteurs électriques que comporte une ligne aérienne électrifiée de moyenne ou de haute tension.

On connaît, d'ores et déjà, des dispositifs permettant de mettre à la terre un tel conducteur électrique aérien.

En particulier, il est connu du document FR-2.719.422 un dispositif comportant les caractéristiques divulguées dans le préambule de la revendication 1 , d'une part, une pince pourvue d'un moyen pour son serrage sur un tel conducteur ainsi que d'un moyen pour manoeuvrer ce moyen de serrage, d'autre part, un étau pourvu d'un moyen pour son serrage sur un élément relié à la terre ainsi que d'un moyen pour manoeuvrer ce moyen de serrage et, d'autre part encore, un câble électrique permettant de raccorder la pince à l'étau. Un tel dispositif comporte, encore, une perche, au moins en partie réalisée en un matériau isolant, recevant la pince à une de ses extrémités, et destinée à être manipulée par un opérateur pour l'accrochage et/ou le serrage de cette pince sur un conducteur électrique en vue de sa mise à la terre.

En fait, cette perche comporte, à son extrémité, un moyen pour son raccordement à ladite pince. Ce moyen de raccordement est de type amovible et constitue, également, un organe pour l'actionnement du moyen de manoeuvre du moyen de serrage que comporte l'étau.

Bien qu'un tel dispositif soit réalisé de manière à garantir un niveau élevé de sécurité pour un opérateur en charge de sa manipulation et que cette manipulation doit être assurée selon un protocole strict afin de garantir cette sécurité, il est toujours possible pour un opérateur de manipuler ce dispositif de manière inappropriée, soit de manière volontaire, soit de manière involontaire, ce qui, dans le cadre d'une intervention sur une installation de moyenne ou de haute tension, peut occasionner des blessures, souvent mortelles, à un tel opérateur ou à une personne se situant à proximité.

En particulier, un tel dispositif ne permet pas d'empêcher un opérateur d'accrocher la pince d'un tel dispositif sur un conducteur électrique en ayant, au préalable, omis de serrer l'étau de ce dispositif sur un élément à la terre.

De plus, l'organe d'actionnement du moyen de manoeuvre permet un serrage de l'étau sur un élément à la terre. Cependant, l'utilisation d'un tel organe d'actionnement ne permet pas d'empêcher, d'une part, un serrage inapproprié ou insuffisant de l'étau sur un tel élément à la terre et, d'autre part, un actionnement de ce même moyen de manoeuvre à l'aide d'un autre outil, en particulier à l'aide d'un autre organe d'actionnement correspondant, par exemple, à un autre dispositif de mise à la terre.

Finalement, l'organe d'actionnement est de type amovible et peut, donc, de ce fait, se désolidariser de la pince et/ou de la perche. Une telle possibilité de désolidarisation nécessite de contrôler la présence de toutes les pièces du dispositif de mise à la terre au départ de l'atelier sous peine d'être inutilisable une fois arrivé sur le chantier. De plus et dans le cadre de l'utilisation de ce dispositif sur un chantier, une telle désolidarisation, lorsque la pince est accrochée ou serrée sur un conducteur, peut s'avérer problématique lorsqu'il s'agit de décrocher et de récupérer cette pince en fin d'intervention.

La présente invention se veut de remédier aux inconvénients des dispositifs de l'état de la technique.

A cet effet, l'invention concerne un dispositif de mise à la terre d'un conducteur électrique d'une ligne électrique aérienne, notamment de moyenne ou de haute tension, comportant, d'une part, un étau pourvu d'un moyen pour son serrage sur un élément relié à la terre ainsi que d'un moyen pour la manoeuvre de ce moyen de serrage, d'autre part, une pince pourvue d'un moyen pour son serrage sur un conducteur électrique ainsi que d'un moyen pour la manoeuvre de ce moyen de serrage et,d'autre part encore, un câble électrique pour le raccordement de la pince à l'étau.

Ce dispositif est caractérisé par les caractéristiques divulguées dans la partie caractérisante de la revendication 1 et les revendications dépendantes.

Ces caractéristiques permettent, de manière avantageuse, d'actionner, soit uniquement le moyen de manoeuvre de l'étau à l'exclusion du moyen de manoeuvre de la pince, soit uniquement le moyen de manoeuvre de la pince à l'exclusion du moyen de manoeuvre de l'étau et, ainsi, d'empêcher l'actionnement, de manière simultanée, des moyens de manoeuvre de l'étau et de la pince.

Un autre avantage consiste en ce que l'unique organe amovible de commande est associé, par fabrication, à l'étau ce qui oblige l'opérateur à serrer, tout d'abord, l'étau sur un élément à la terre avant de pouvoir utiliser la pince.

De plus, le moyen de verrouillage du moyen de manoeuvre de la pince est verrouillé en position de serrage à vide de la pince ce qui rend cette pince totalement inutilisable par un opérateur, ceci avant d'avoir serré l'étau sur l'élément à la terre, avant d'avoir retiré l'unique organe amovible de commande de cet étau et avant de mettre en place cet organe de commande sur la pince.

Un autre avantage concerne le fait que l'étau, respectivement la pince, comportent un moyen de commande, comportant l'unique organe amovible de commande, et conçu et/ou agencé pour autoriser le retrait de cet unique organe amovible de commande uniquement en position de verrouillage du moyen de verrouillage du moyen de manoeuvre que comporte cet étau, respectivement cette pince.

Tel que mentionné ci-dessus, l'étau comporte des moyens pour maintenir le moyen de verrouillage du moyen de manoeuvre de cet étau en position déverrouillée, ceci pour une force de serrage du moyen de serrage sur l'élément à la terre inférieure à une valeur nominale. La présence de ces moyens de maintien permet, avantageusement, d'empêcher le verrouillage du moyen de manoeuvre de cet étau (et, par conséquent, le retrait de l'unique organe amovible de commande) tant que l'étau n'est pas serré de manière appropriée (c'est-à-dire avec une force de serrage suffisante, à savoir supérieure à une valeur nominale) sur l'élément à la terre. Ainsi, en empêchant le retrait de l'organe de commande tant que l'étau n'est pas serré sur l'élément de manière appropriée, on empêche l'utilisation de cet organe de commande amovible pour commander la pince et, ainsi, on empêche l'accrochage de cette pince sur un conducteur électrique.

De manière avantageuse, la pince comporte des moyens pour maintenir son moyen de serrage resserré sur un conducteur électrique, ceci avec une force de serrage au moins égale à une valeur nominale. Cette caractéristique permet, avantageusement, de garantir un serrage approprié de la pince sur un tel conducteur électrique et, ainsi, un contact électrique approprié entre cette pince et ce conducteur. Cette caractéristique permet, alors tout particulièrement, d'éviter la formation d'arcs électriques entre un conducteur et la pince, comme il se produit pour les dispositifs de l'état de la technique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

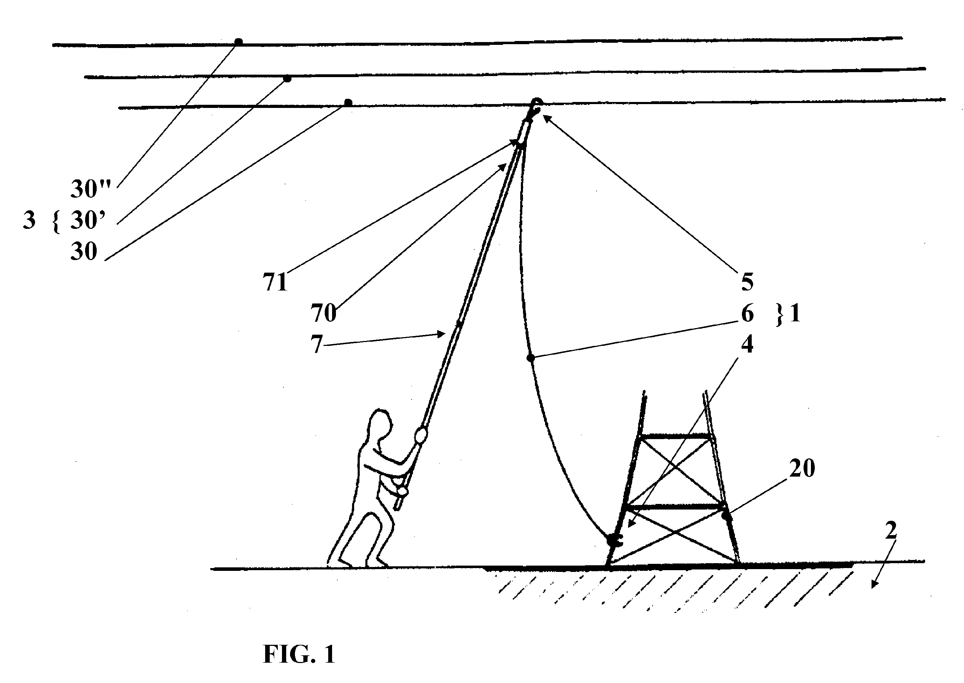

- la figure 1 et une vue schématisée du dispositif de mise à la terre conforme à l'invention ;
- la figure 2 est une vue schématisée et en élévation de l'étau que comporte le dispositif de mise à la terre illustré figure 1 ;
- la figure 3 est une vue schématisée et en coupe de l'étau illustré figure 2, ceci en l'absence de serrage de cet étau sur un élément à la terre ;
- la figure 4 est une vue similaire à la précédente et correspondant à un étau en position de serrage approprié sur un élément à la terre ;
- la figure 5 et une vue schématisée et en élévation de la pince que comporte le dispositif de mise à la terre illustré figure 1 ;
- la figure 6 est une vue schématisée et en coupe de la pince illustrée figure 5, ceci en position de serrage à vide de cette pince ;
- la figure 7 est une vue similaire à la précédente et correspondant à une pince en position de serrage sur un conducteur électrique.

La présente invention concerne le domaine de la fabrication des dispositifs 1 utilisés dans le cadre de la maintenance des installations électriques, plus particulièrement ceux conçus pour assurer la mise à la terre 2 d'un conducteur électrique (30 ; 30' ; 30") que comporte une ligne aérienne électrifiée 3 de moyenne ou de haute tension.

Un tel dispositif 1 de mise à la terre comporte, usuellement, un étau 4 destiné à être serré sur un élément 20 relié à la terre 2, une pince 5 destinée à être serrée sur un conducteur électrique (30 ; 30' ; 30") qu'il convient de mettre à la terre 2 ainsi qu'un câble électrique 6 pour le raccordement d'un tel étau 4 à une telle pince 5.

De manière additionnelle, un tel dispositif 1 de mise à la terre peut, encore, comporter une perche 7, au moins en partie réalisée en un matériau isolant, destinée à être manipulée par un opérateur lors de la mise à la terre 2 d'un conducteur électrique (30 ; 30' ; 30"), et comportant, au niveau de l'une de ses extrémités 70, un moyen 71 pour la réception de la pince 5.

En ce qui concerne ledit étau 4, celui-ci comporte un corps d'étau 40 ainsi qu'un moyen 41 pour le serrage de cet étau 4 sur un élément 20 relié à la terre 2.

A ce propos, on observera qu'une partie 410 d'un tel moyen 41 de serrage est constituée par une mâchoire fixe 410 dont est pourvue le corps 40 d'étau 4 tandis qu'une autre partie 411 d'un tel moyen 41 de serrage est constituée par une mâchoire mobile 411, que comporte cet étau 4, et qui est mobile (plus particulièrement en translation) par rapport au corps 40 de cet étau 4.

C'est, plus particulièrement, entre ces deux mâchoires (410 ; 411) qu'est serré ledit élément 20 relié à la terre 2.

Une autre caractéristique consiste en ce que ledit étau 4 comporte, encore, un moyen 42 pour la manoeuvre dudit moyen de serrage 41.

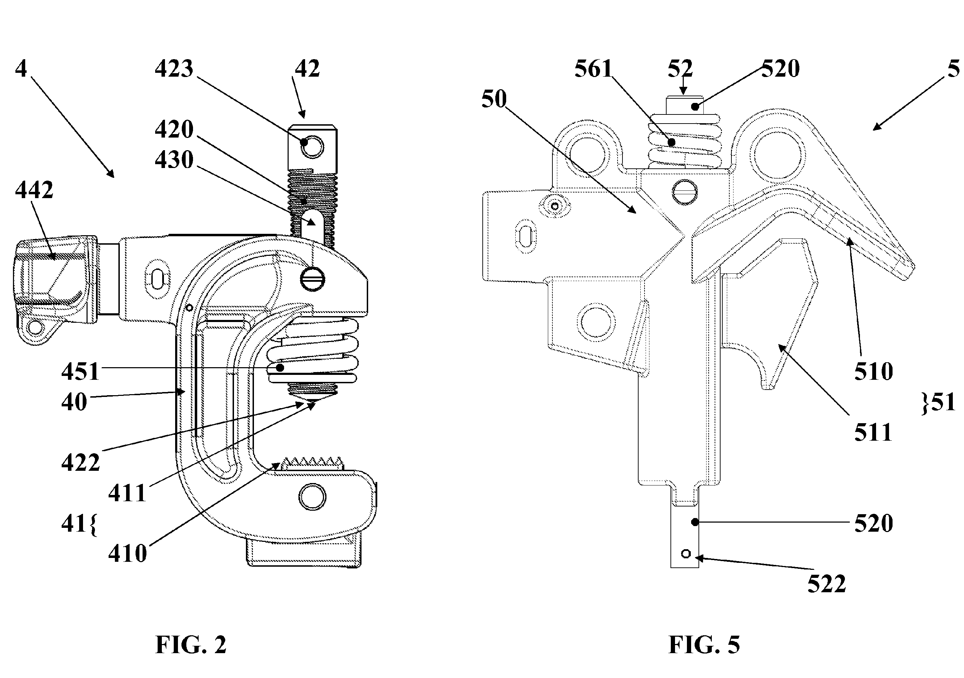

Tel que visible sur les figures 2 à 4, un tel moyen 42 de manoeuvre comporte une tige filetée 420 montée en translation ainsi qu'en rotation par rapport à un taraudage 421 associé au corps 40 de l'étau 4.

Cette tige filetée 420 présente une extrémité libre 422, orientée en direction de la mâchoire fixe 410 de l'étau 4, et, selon le cas, constituant elle-même la mâchoire mobile 411 de cet étau 4 ou recevant un organe constituant une telle mâchoire mobile 411.

Une autre caractéristique consiste en ce que ce moyen de manoeuvre 42 comporte, encore, un organe 423 pour l'actionnement en rotation de la tige filetée 420 de ce moyen de manoeuvre 42. En fait et tel que visible sur les figures 2 à 4, un tel organe d'actionnement 423 est de type manuel et adopte la forme d'un levier, d'une manivelle, d'une poignée, d'un bouton ou analogue.

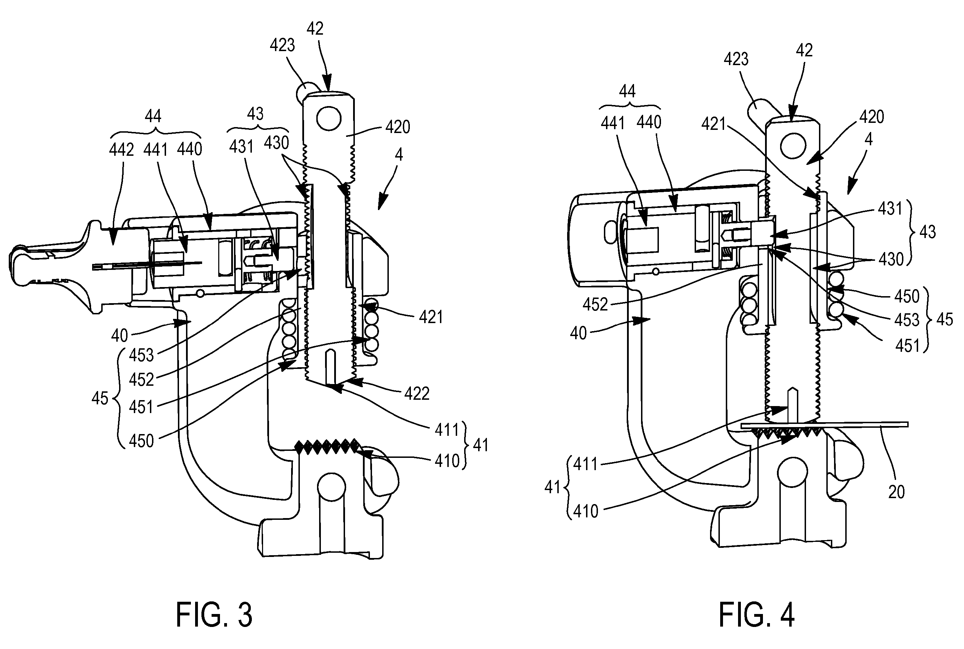

Selon l'invention, l'étau 4 du dispositif 1 de mise à la terre conforme à l'invention comporte, également, un moyen 43 pour verrouiller le moyen de manoeuvre 42 que comporte cet étau 4 dans une position inactive de manoeuvre du moyen de serrage 41 par ce moyen de manoeuvre 42, ceci dans une position de serrage de l'étau 4 sur l'élément 20 à la terre 2 (figure 4).

Tel que visible sur les figures 3 et 4, un tel moyen de verrouillage 43 comporte, d'une part, au moins une gâche 430 dont est pourvue la tige filetée 420 et qui adopte sensiblement la forme d'une gorge longitudinale et, d'autre part, un pêne 431, monté en regard de la tige filetée 420, ceci de manière mobile par rapport à cette tige filetée 420 (plus particulièrement en translation perpendiculairement à la direction d'extension de cette tige filetée 420) ainsi que par rapport au corps 40 de l'étau 4.

En fait, le dispositif 1 est conçu en sorte que ce pêne 431 adopte, d'une part, une position de verrouillage dans laquelle ce pêne 431 coopère avec une gâche 430 que comporte la tige filetée 420 (figure 4) pour assurer le verrouillage par le moyen de verrouillage 43 du moyen de manoeuvre 42 de l'étau 4 (ceci en position inactive de manoeuvre, par ce moyen de manoeuvre 42, du moyen de serrage 41) et, d'autre part, une position déverrouillée dans laquelle ce pêne 431 se situe en retrait par rapport à une telle gâche 430, ceci pour assurer le déverrouillage par le moyen de verrouillage 43 du moyen de manoeuvre 42 de l'étau 4 (figure 3).

L'étau 4 comporte, encore, un moyen 44 pour commander le moyen 43 de verrouillage de cet étau 4, plus particulièrement le verrouillage et le déverrouillage de ce moyen de verrouillage 43.

Tel que visible sur les figues 3 et 4, un tel moyen de commande 44 est constitué par une serrure comportant, d'une part, une fourrure 440 montée fixe par rapport au corps 40 de l'étau 4 et, de préférence, au moins en partie à l'intérieur de celui-ci 40. Cette serrure comporte, d'autre part, un barillet 441, monté mobile à l'intérieur de la fourrure 440 (plus particulièrement en translation perpendiculairement à la direction d'extension de cette tige filetée 420), et en prise avec le moyen de verrouillage 43, plus particulièrement avec le pêne 431 que comporte ce moyen de verrouillage 43. D'autre part encore, cette serrure comporte un organe amovible de commande 442 coopérant, de manière amovible, avec ledit barillet 441 et constitué par un clé.

Le dispositif 1 conforme à l'invention est, alors, conçu en sorte que l'actionnement de cet organe amovible de commande 442 permet d'entraîner en déplacement le pêne 431 du moyen de verrouillage 43 pour, selon le cas, verrouiller ou déverrouiller le moyen de verrouillage 43 que comporte l'étau 4.

Une caractéristique additionnelle de ce moyen de commande 44 consiste en ce qu'il est conçu et/ou agencé pour autoriser le retrait de l'organe amovible de commande 442 uniquement en position de verrouillage du moyen de verrouillage 43 de l'étau 4 et dans une position de serrage de l'étau 4 sur l'élément 20 à la terre 2.

Ceci permet, de manière avantageuse, d'empêcher le retrait de cet organe de commande 442 lorsque le moyen de manoeuvre 42 de l'étau 4 n'est pas verrouillé en position inactive de manoeuvre du moyen de serrage 41, ceci dans une position de serrage de l'étau 4 sur l'élément 20 à la terre 2.

Encore une autre caractéristique consiste en ce que l'étau 4 comporte des moyens 45 pour maintenir le moyen de verrouillage 43 en position déverrouillée, ceci pour une force de serrage du moyen de serrage 41 sur l'élément 20 à la terre 2 inférieure à une valeur nominale.

En fait, cette valeur nominale est, plus particulièrement, déterminée en sorte que le serrage de l'étau 4 soit mécaniquement (apte à empêcher une désolidarisation) et électriquement (apte à éviter tout arc électrique) approprié.

La présence de ces moyens de maintien 45 permet, alors avantageusement, d'empêcher le verrouillage du moyen de verrouillage 43 et, par conséquent (et compte tenu de la conception et/ou e l'agencement du moyen de commande 44), d'empêcher le retrait de l'organe amovible de commande 442, ceci pour une force de serrage du moyen de serrage 41 sur l'élément 20 à la terre 2 inférieure à une valeur nominale.

Un tel retrait est, alors, empêché pour un serrage insuffisant ou inapproprié de l'étau 4 sur un élément 20 à terre 2, en particulier en l'absence d'un tel serrage.

Tel que visible sur les figures 3 et 4, les moyens 45 pour maintenir le moyen de verrouillage 23 en position déverrouillée comportent une douille 450 montée en coulissement par rapport au corps 40 de l'étau 4 et pourvue intérieurement d'un taraudage 421 pour coopérer avec le filetage de la tige filetée 420, que comporte le moyen de manoeuvre 42, et qui est au moins en partie positionnée à l'intérieur de cette douille 450.

Ces moyens de maintien 45 comportent, encore, un moyen de rappel 451 (plus particulièrement constitué par un ressort ou analogue) interposé entre la douille 450 et le corps 40 de l'étau 4.

Un tel moyen de rappel 451 est conçu pour repousser ladite douille 450 en dehors du corps 40 de l'étau 4, en direction de la mâchoire fixe 410 de cet étau 4, et dans une position de serrage de ce dernier 4, ceci à l'encontre de la manoeuvre du moyen de manoeuvre 42.

Selon une autre caractéristique visible sur les figures 3 et 4, la douille 450 des moyens de maintien 45 comporte une paroi 452 pourvue d'un orifice traversant 453.

Cet orifice traversant 453 est ménagé au droit d'au moins une gâche 430 (gorge longitudinale), que comporte le moyen de verrouillage 43 de l'étau 4, et dont est pourvue la tige filetée 420 du moyen de manoeuvre 42 de cet étau 4.

Tel qu'illustré figure 3 et pour une force de serrage inférieure à la valeur nominale, l'orifice traversant 453 est décalé par rapport au pêne 431 du moyen de verrouillage 43 qui prend, alors, appui contre la paroi 452 de la douille 450 et adopte une position de déverrouillage du moyen de manoeuvre 42.

Cependant, tel que visible figure 4 et pour une force de serrage du moyen de serrage 41 sur l'élément 20 à la terre 2 au moins égale à une valeur nominale, l'orifice traversant 453 est situé en regard du pêne 431 du moyen de verrouillage 43 ce qui permet à ce pêne 431, sous l'impulsion de l'organe de manoeuvre 422, de traverser ledit orifice traversant 453 pour coopérer avec la gâche 430 du moyen de verrouillage 43 dont est pourvu le moyen de manoeuvre 42 (plus particulièrement la tige filetée 420) et pour adopter une position de verrouillage de ce moyen de manoeuvre 42, ceci en position inactive de manoeuvre du moyen de serrage 41 par ce moyen de manoeuvre 42.

Dans cette position, l'unique organe de commande amovible 422 peut, alors, être retiré de l'étau 4 pour coopérer avec la pince 5.

En ce qui concerne cette pince 5, celle-ci comporte, d'une part, un corps de pince 50, d'autre part, un moyen 51 pour le serrage de cette pince 5 sur un conducteur électrique (30 ; 30' ; 30") que comporte une ligne aérienne électrifiée 3 de moyenne ou de haute tension et, d'autre part encore, un moyen 52 pour la manoeuvre dudit moyen de serrage 51.

En ce qui concerne ce moyen de serrage 51, une partie 510 d'un tel moyen 51 de serrage est constituée par une mâchoire fixe 510 dont est pourvue le corps 50 de pince 5 tandis qu'une autre partie 511 d'un tel moyen 51 de serrage est constituée par une mâchoire mobile 511, que comporte cette pince 5, et qui est mobile par rapport au corps 50 de cette pince 5 et, par conséquent, par rapport à la mâchoire fixe 510. C'est, plus particulièrement, entre ces deux mâchoires (510 ; 511) qu'est serré ledit conducteur électrique (30 ; 30' ; 30").

En fait et selon un mode de réalisation non représenté, une telle mâchoire mobile 511 peut être de type pivotant. Dans un pareil cas, la pince 5 comporte un moyen pour le montage en pivotement de cette mâchoire mobile 511, ceci sur le corps 50 de pince 5 et par rapport à la mâchoire fixe 510. Cette mâchoire mobile 511 est, alors, commandée en pivotement par actionnement du moyen de manoeuvre 52. Un mode particulier de réalisation consiste en ce que ce moyen de manoeuvre 52 peut, alors, prendre appui sur une butée d'arrêt que comporte la mâchoire mobile 511 et, par actionnement de ce moyen de manoeuvre 52, provoquer le basculement de cette mâchoire mobile 511, plus particulièrement de manière à assurer l'éloignement de cette mâchoire mobile 511 par rapport à la mâchoire fixe 510 (en vue d'assurer l'ouverture du moyen de serrage 51), notamment à l'encontre de l'action de moyens de rappel de la mâchoire mobile 511 en direction de la mâchoire fixe 510. Bien entendu, par actionnement inverse du moyen d'actionnement 52, il est assuré la fermeture du moyen de serrage 51, soit à vide, soit sur un conducteur (30 ; 30' ; 30").

Selon un autre mode de réalisation illustré figures 5 à 7, la pince 5 comporte un moyen 53 pour le montage en translation de la mâchoire mobile 511 sur le corps 50 de pince 5 et par rapport à la mâchoire fixe 510. Un tel moyen de montage en translation 53 comporte, d'une part, un filetage 530 que comporte le moyen de manoeuvre 52 et, d'autre part, un taraudage 531, des dents ou analogue que comporte la mâchoire mobile 511 et qui coopèrent avec le filetage 530 du moyen de manoeuvre 52. Cette mâchoire mobile 511 est, alors, commandée en translation par rapport à la mâchoire fixe 510, ceci par actionnement (plus particulièrement en rotation) du moyen de manoeuvre 52.

En ce qui concerne ce moyen de manoeuvre 52, celui-ci comporte une tige filetée 520 montée en translation ainsi qu'en rotation par rapport à un taraudage 521 associé au corps 50 de la pince 5.

Ce moyen de manoeuvre 52 comporte, encore, un organe 522 pour l'actionnement en rotation de sa tige filetée 520. En fait et tel que visible sur les figures 5 à 7, un tel organe d'actionnement 522 adopte la forme d'au moins un moyen (plus particulièrement un téton latéral) apte à coopérer avec un moyen complémentaire (plus particulièrement une rainure) que comporte le moyen de réception 71 de la perche 7 mentionnée ci-dessus, ceci pour un entraînement en rotation du moyen de manoeuvre 52 par la perche 7.

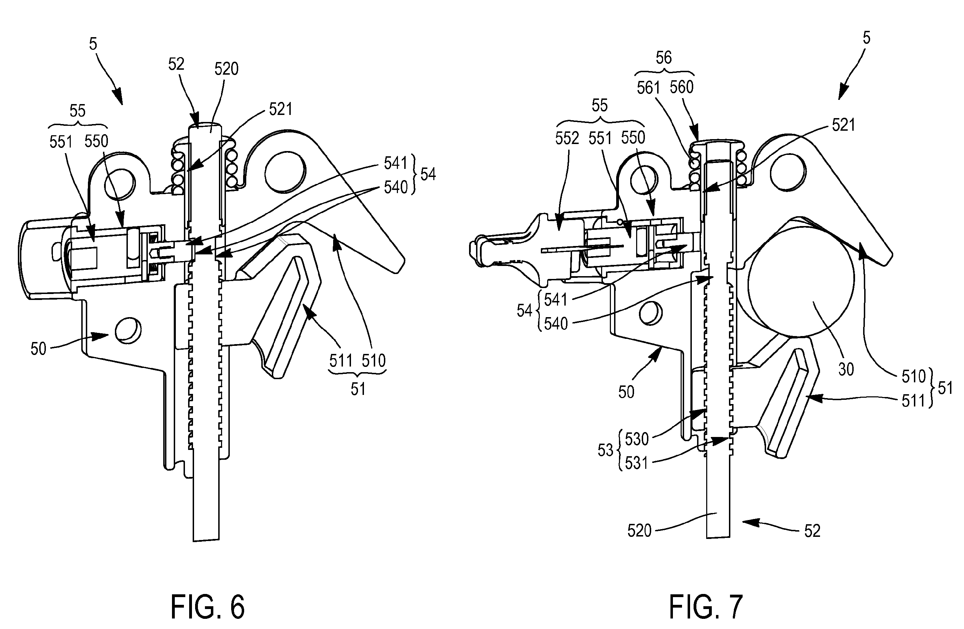

Selon l'invention, la pince 5 du dispositif 1 de mise à la terre conforme à l'invention comporte, également, un moyen 54 pour verrouiller le moyen de manoeuvre 52 que comporte cette pince 5 dans une position inactive de manoeuvre du moyen de serrage 51 par ce moyen de manoeuvre 52, ceci dans une position de serrage à vide de la pince 5 (figure 6).

Tel que visible sur les figures 6 et 7, un tel moyen de verrouillage 54 comporte, d'une part, au moins une gâche 540 dont est pourvue la tige filetée 520 et qui adopte sensiblement la forme d'une gorge radiale et, d'autre part, un pêne 541, monté en regard de la tige filetée 520, ceci de manière mobile par rapport à cette tige filetée 520 (plus particulièrement en translation perpendiculairement à la direction d'extension de cette tige filetée 520) ainsi que par rapport au corps 50 de la pince 5.

En fait, le dispositif 1 est conçu en sorte que ce pêne 541 adopte, d'une part, une position de verrouillage dans laquelle ce pêne 541 coopère avec une gâche 540 que comporte la tige filetée 520 (figure 6) pour assurer le verrouillage par le moyen de verrouillage 54 du moyen de manoeuvre 52 de la pince 5 (ceci en position inactive de manoeuvre, par ce moyen de manoeuvre 52, du moyen de serrage 51 et en position se serrage à vide de la pince 5) et, d'autre part, une position déverrouillée dans laquelle ce pêne 541 se situe en retrait par rapport à une telle gâche 540, ceci pour assurer le déverrouillage par le moyen de verrouillage 54 du moyen de manoeuvre 52 de la pince (figure 7).

La pince 5 comporte, encore, un moyen 55 pour commander le moyen 54 de verrouillage de cette pince 5, plus particulièrement le verrouillage et le déverrouillage de ce moyen de verrouillage 54.

Tel que visible sur les figues 6 et 7, un tel moyen de commande 55 est constitué par une serrure comportant, d'une part, une fourrure 550 montée fixe par rapport au corps 50 de la pince 5 et, de préférence, au moins en partie à l'intérieur de celui-ci 50. Cette serrure comporte, d'autre part, un barillet 551, monté mobile à l'intérieur de la fourrure 550 (plus particulièrement en translation perpendiculairement à la direction d'extension de cette tige filetée 520), et en prise avec le moyen de verrouillage 54, plus particulièrement avec le pêne 541 que comporte ce moyen de verrouillage 54. D'autre part encore, cette serrure comporte un organe amovible de commande 552 coopérant, de manière amovible, avec ledit barillet 551 et constitué par un clé.

Le dispositif 1 conforme à l'invention est, alors, conçu en sorte que l'actionnement de cet organe amovible de commande 552 permet d'entraîner en déplacement le pêne 541 du moyen de verrouillage 54 pour, selon le cas, verrouiller ou déverrouiller le moyen de verrouillage 54 que comporte la pince 5.

Une caractéristique additionnelle de ce moyen de commande 55 consiste en ce qu'il est conçu et/ou agencé pour autoriser le retrait de l'organe amovible de commande 552 uniquement en position de verrouillage du moyen de verrouillage 54 de la pince 5 et dans une position de serrage à vide de cette pince 5.

Ceci permet, de manière avantageuse, d'empêcher le retrait de cet organe amovible de commande 552 lorsque le moyen de manoeuvre 52 de la pince 5 n'est pas verrouillé en position inactive de manoeuvre du moyen de serrage 51, ceci dans une position de serrage à vide de la pince 5.

A ce propos, on observera que, selon l'invention, l'organe amovible de commande 442 de l'étau 4 et l'organe amovible de commande 552 de la pince 5 sont constitués par un unique organe amovible de commande, de préférence sous forme d'une clé.

Cette caractéristique permet, de manière avantageuse, de commander, de manière séparée et successive, et avec cet unique organe amovible de commande (442/552) :
- soit le verrouillage du moyen de verrouillage 43 du moyen de manoeuvre 42 de l'étau 4 (ceci dans une position inactive de manoeuvre du moyen de serrage 41 par ce moyen de manoeuvre 42 et dans une position de serrage de l'étau 4 sur l'élément 20 à la terre 2 avec une force de serrage au moins égale à une valeur nominale) et ensuite le déverrouillage du moyen de verrouillage 54 du moyen de manoeuvre 52 de la pince 5 (ceci à partir d'une position de serrage à vide de la pince 5) ;
- soit le verrouillage du moyen de verrouillage 54 du moyen de manoeuvre 52 de la pince 5 (ceci dans une position de serrage à vide de la pince 5) et ensuite le déverrouillage du moyen de verrouillage 54 du moyen de manoeuvre 52 de l'étau 5.

Une caractéristique additionnelle de la pince 5 consiste en ce qu'elle comporte des moyens 56 pour maintenir son moyen de serrage 51 resserré sur un conducteur électrique (30 ; 30' ; 30"), ceci avec une force de serrage au moins égale à une valeur nominale.

Tel que visible sur les figures 6 et 7, les moyens 56 pour maintenir le moyen de serrage 51 resserré comportent, d'une part, une douille 560 montée en coulissement par rapport au corps 50 de la pince 5 et pourvue intérieurement d'un taraudage 521 pour coopérer avec le filetage de la tige fileté 520, que comporte la moyen de manoeuvre 52, et qui est au moins en partie positionnée à l'intérieur de cette douille 560. Ces moyens 56 de maintien comportent, encore, un moyen de rappel 562 (plus particulièrement constitué par un ressort ou analogue) interposé entre la douille 560 et le corps 50 de la pince 5.

Un tel moyen de rappel 562 est conçu pour repousser la mâchoire mobile 511 en direction de la mâchoire fixe 510, ceci avec une force permettant d'assurer un serrage du moyen de serrage 51 sur un conducteur (30 ; 30' ; 30") avec une force de serrage au moins égale à une valeur nominale. Cette caractéristique permet, de manière avantageuse, de garantir un contact électrique entre la pince 5 et le conducteur (30 ; 30' ; 30") à même d'éviter l'apparition d'arcs électriques entre ceux-ci (5 ; 30, 30', 30").

## Revendications

1. Dispositif (1) de mise à la terre d'un conducteur électrique (30) d'une ligne électrique aérienne (3), notamment de moyenne ou de haute tension, comportant :
- un étau (4) pourvu d'un moyen (41) pour son serrage sur un élément (20) relié à la terre (2) ainsi que d'un moyen (42) pour la manoeuvre de ce moyen de serrage (41) ;
- une pince (5) pourvue d'un moyen (51) pour son serrage sur un conducteur électrique (30) ainsi que d'un moyen (52) pour la manoeuvre de ce moyen de serrage (51) ;
- un câble électrique (6) pour le raccordement de la pince (5) à l'étau (4), **caractérisé par le fait que** :
- l'étau (4) comporte :
- un moyen (43) pour verrouiller son moyen de manoeuvre (42) dans une position inactive de manoeuvre du moyen de serrage (41), ceci dans une position de serrage de l'étau (4) sur l'élément (20) à la terre (2), ce moyen pour verrouiller (43) comportant au moins une gâche (430) et un pêne (431) adoptant une position de verrouillage dans laquelle ce pêne (431) coopère avec une telle gâche (430) ;
- un moyen (44) pour commander son moyen de verrouillage (43), ce moyen de commande (44) étant constitué par une serrure comportant, d'une part, une fourrure (440) montée fixe par rapport au corps (40) de l'étau (4), d'autre part, un barillet (441) monté mobile à l'intérieur de la fourrure (440) et en prise avec le moyen de verrouillage (43) et, d'autre part encore, un unique organe amovible de commande (442) coopérant, de manière amovible, avec le barillet (441) et commandant le pêne (431) du moyen de verrouillage (43) ;
- la pince (5) comporte :
- un moyen (54) pour verrouiller son moyen de manoeuvre (52) dans une position inactive de manoeuvre du moyen de serrage (51), ceci dans une position de serrage à vide de la pince (5), ce moyen pour verrouiller (54) comportant au moins une gâche (540) et un pêne (541) adoptant une position de verrouillage dans laquelle ce pêne (541) coopère avec une telle gâche (540) ;
- un moyen (55) pour commander son moyen de verrouillage (54), ce moyen de commande (55) étant constitué par une serrure comportant, d'une part, une fourrure (550) montée fixe par rapport au corps (50) de la pince (5), d'autre part, un barillet (551) monté mobile à l'intérieur de la fourrure (550) et en prise avec le moyen de verrouillage (54) et, d'autre part encore, un unique organe amovible de commande (552) coopérant, de manière amovible, avec le barillet (551) et commandant le pêne (541) du moyen de verrouillage (54) ;
- l'organe amovible de commande (442) de l'étau (4) et l'organe amovible de commande (552) de la pince (5) sont constitués par un unique organe amovible de commande (442 ; 552) pour commander, de manière séparée et successive, d'une part, le verrouillage du moyen de verrouillage (43) de l'étau (4) en position de serrage sur l'élément (20) à la terre (2) et le déverrouillage du moyen de verrouillage (54) de la pince (5) et, d'autre part, le verrouillage du moyen de verrouillage (54) de la pince (5) en position de serrage à vide et le déverrouillage du moyen de verrouillage (43) de l'étau (4).

2. Dispositif (1) de mise à la terre selon la revendication 1, **caractérisé par le fait que** l'étau (4) comporte, d'une part, un corps d'étau (40), d'autre part, une mâchoire fixe (410) dont est pourvu le corps d'étau (40) et constituant une partie du moyen de serrage (41) de l'étau (4) et, d'autre part encore, une mâchoire mobile (411) par rapport au corps d'étau (40) et constituant l'autre partie du moyen de serrage (41) de l'étau (4).

3. Dispositif (1) de mise à la terre selon l'une quelconque des revendications précédentes, **caractérisé par le fait que** la pince (4) comporte, d'une part, un corps de pince (50), d'autre part, une mâchoire fixe (510) dont est pourvu le corps de pince (50) et constituant une partie du moyen de serrage (51) de la pince (5) et, d'autre part encore, une mâchoire mobile (511) par rapport au corps de pince (50) et constituant l'autre partie du moyen de serrage (51) de la pince (5).

4. Dispositif (1) de mise à la terre selon la revendication 3, **caractérisé par le fait que** la pince (5) comporte un moyen pour le montage en pivotement de la mâchoire mobile (511), sur le corps de pince (50), et par rapport à la mâchoire fixe (510) et que cette mâchoire mobile (511) est commandée en pivotement par actionnement du moyen de manoeuvre (52) que comporte la pince (5).

5. Dispositif (1) de mise à la terre selon la revendication 3, **caractérisé par le fait que** la pince (5) comporte un moyen (53) pour le montage en translation de la mâchoire mobile (511), sur le corps de pince (50), et par rapport à la mâchoire fixe (510) et que cette mâchoire mobile (511) est commandée en translation par actionnement du moyen de manoeuvre (52) que comporte la pince (5).

6. Dispositif (1) de mise à la terre selon la revendication 5, **caractérisé par le fait que** le moyen (53) de montage en translation de la mâchoire mobile (511) est constitué, d'une part, par un filetage (530) que comporte le moyen de manoeuvre (52) et, d'autre part, par un taraudage (531), par des dents ou analogue que comporte la mâchoire mobile (511) et qui coopèrent avec le filetage (530) du moyen de manoeuvre (52).

7. Dispositif (1) de mise à la terre selon l'une quelconque des revendications précédentes, **caractérisé par le fait que** le moyen (42) de manoeuvre de l'étau (4) comporte une tige filetée (420), d'une part, montée en translation ainsi qu'en rotation par rapport à un taraudage (421) associé au corps (40) de l'étau (4) et, d'autre part, pourvue d'au moins une gâche (430), que comporte le moyen de verrouillage (43) de l'étau (4), et conçue pour coopérer avec un pêne (431), que comporte ce moyen de verrouillage (43), et qui est commandé par l'unique organe amovible de commande (442).

8. Dispositif (1) de mise à la terre selon les revendications 2 et 7, **caractérisé par le fait que** la tige filetée (420) du moyen de manoeuvre (42) comporte une extrémité libre (422) constituant la mâchoire mobile (411) ou recevant un organe constituant une telle mâchoire mobile (411).

9. Dispositif (1) de mise à la terre selon la revendication 7, **caractérisé par le fait que** le moyen de manoeuvre (42) de l'étau (4) comporte un organe de type manuel (423), notamment sous forme d'un levier, d'une manivelle, d'une poignée, d'un bouton ou analogue, pour l'actionnement en rotation de la tige filetée (421) de ce moyen de manoeuvre (42).

10. Dispositif (1) de mise à la terre selon l'une quelconque des revendications précédentes, **caractérisé par le fait que** le moyen de manoeuvre (52) de la pince (5) comporte une tige filetée (520), d'une part, montée en translation ainsi qu'en rotation par rapport à un taraudage (521) associé au corps (50) de la pince (5) et, d'autre part, pourvue d'au moins une gâche (540), que comporte le moyen de verrouillage (54) de la pince (5), et conçue pour coopérer avec un pêne (541), que comporte ce moyen de verrouillage (54), et qui est commandé par l'unique organe amovible de commande (552).

11. Dispositif (1) de mise à la terre selon la revendication 10, **caractérisé par le fait que** :
- il comporte une perche (7), au moins en partie réalisée en un matériau isolant, et comportant, au niveau de l'une de ses extrémités (70), un moyen (71) pour la réception de la pince (5) ;
- le moyen de manoeuvre (52) de la pince (5) comporte un organe (522) pour l'actionnement en rotation de sa tige filetée (520) et adoptant la forme d'au moins un moyen apte à coopérer avec un moyen complémentaire dont est pourvu le moyen de réception (71) que comporte la perche (7).

12. Dispositif (1) de mise à la terre selon l'une quelconque des revendications précédentes, **caractérisé par le fait que** le moyen de commande (44) de l'étau (4), d'une part, comporte l'unique organe amovible de commande (442) et, d'autre part, est conçu et/ou agencé pour autoriser le retrait de cet unique organe amovible de commande (442) uniquement en position de verrouillage du moyen de verrouillage (43) de l'étau (4) et dans une position de serrage de cet étau (4) sur l'élément (20) à la terre (2).

13. Dispositif (1) de mise à la terre selon l'une quelconque des revendications précédentes, **caractérisé par le fait que** le moyen de commande (55) de la pince (5), d'une part, comporte l'unique organe amovible de commande (552) et, d'autre part, est conçu et/ou agencé pour autoriser le retrait de cet unique organe amovible de commande (552) uniquement en position de verrouillage du moyen de verrouillage (54) de la pince (5) et dans une position de serrage à vide de cette pince (5).

14. Dispositif (1) de mise à la terre selon l'une quelconque des revendications précédentes, **caractérisé par le fait que** l'étau (4) comporte des moyens (45) pour maintenir son moyen de verrouillage (43) en position déverrouillée, ceci pour une force de serrage du moyen de serrage (41) sur l'élément (20) à la terre (2) inférieure à une valeur nominale.

15. Dispositif (1) de mise à la terre selon les revendications 7 et 14, **caractérisé par le fait que** les moyens (45) pour maintenir le moyen de verrouillage (43) en position déverrouillée comportent, d'une part, une douille (450) montée en coulissement par rapport au corps (40) de l'étau (4) et pourvue intérieurement d'un taraudage (421) pour coopérer avec le filetage de la tige filetée (420) au moins en partie positionnée à l'intérieur de cette douille (450) et, d'autre part, un moyen de rappel (451), interposé entre la douille (450) et le corps (40) de l'étau (4), et conçu pour repousser cette douille (450) en dehors du corps (40) de l'étau (4) et dans une position de serrage de l'étau (4).

16. Dispositif (1) de mise à la terre selon la revendication 15, **caractérisé par le fait que** la douille (450) comporte une paroi (452) pourvue d'un orifice traversant (453), d'une part, ménagé au droit d'au moins une gâche (430), que comporte le moyen de verrouillage (43) de l'étau (4), et dont est pourvue la tige filetée (420) du moyen de manoeuvre (42) et, d'autre part, destiné à être traversé par un pêne (431) du moyen de verrouillage (43) de l'étau (4) pour coopérer avec la gâche (430), ceci pour une force de serrage du moyen de serrage (41) sur l'élément (20) à la terre (2) au moins égale à une valeur nominale.

17. Dispositif (1) de mise à la terre selon l'une quelconque des revendications précédentes, **caractérisé par le fait que** la pince (5) comporte des moyens (56) pour maintenir son moyen de serrage (51) resserré sur un conducteur électrique (30), ceci avec une force de serrage au moins égale à une valeur nominale.

18. Dispositif (1) de mise à la terre selon les revendications 3, 10 et 17, **caractérisé par le fait que** les moyens (56) pour maintenir le moyen de serrage (51) resserré comportent, d'une part, une douille (560) montée en coulissement par rapport au corps (50) de la pince (5) et pourvue intérieurement d'un taraudage (521) pour coopérer avec le filetage de la tige filetée (520) du moyen de manoeuvre (52) au moins en partie positionnée à l'intérieur de la douille (560) et, d'autre part, un moyen de rappel, interposé entre la douille (560) et le corps (50) de la pince (5), et conçu pour repousser la mâchoire mobile (511) en direction de la mâchoire fixe (510).

## Patentansprüche

1. Vorrichtung (1) zum Erden eines elektrischen Leiters (30) einer elektrischen Überlandleitung (3), insbesondere einer Mittel- und Hochspannungsleitung, umfassend:
- eine Klemmeinrichtung (4), die mit einem Mittel (41), um sie auf einem mit der Erde (2) verbundenen Element (20) zu spannen, sowie mit einem Mittel (42) zum Betätigen dieses Spannmittels (41) versehen ist;
- eine Klemme (5), die mit einem Mittel (51), um sie auf einem elektrischen Leiter (30) zu spannen, sowie mit einem Mittel (52) zum Betätigen dieses Spannmittels (51) versehen ist;
- ein elektrisches Kabel (6) zum Anschließen der Klemme (5) an die Klemmeinrichtung (4), **dadurch gekennzeichnet, dass**:
- die Klemmeinrichtung (4) Folgendes umfasst:
- ein Mittel (43) zum Verriegeln ihres Betätigungsmittels (42) in einer inaktiven Position des Betätigens des Spannmittels (41), und zwar in einer Position des Spannens der Klemmeinrichtung (4) auf dem mit der Erde (2) verbundenen Element (20), wobei dieses Verriegelungsmittel (43) mindestens ein Schließblech (430) und einen Riegel (431) umfasst, der eine Verriegelungsposition annimmt, in welcher dieser Riegel (431) mit einem solchen Schließblech (430) zusammenwirkt;
- ein Mittel (44) zum Steuern ihres Verriegelungsmittels (43), wobei dieses Steuermittel (44) aus einem Schloss besteht, das einerseits eine Hülle (440), die fest relativ zu dem Körper (40) der Klemme (4) gelagert ist, andererseits einen Zylinder (441), der beweglich in der Hülle (440) gelagert und mit dem Verriegelungsmittel (43) in Eingriff ist, und noch andererseits ein einziges abnehmbares Steuerorgan (442) umfasst, das abnehmbar mit dem Zylinder (441) zusammenwirkt und den Riegel (431) des Verriegelungsmittels (43) steuert;
- die Klemme (5) Folgendes umfasst:
- ein Mittel (54) zum Verriegeln ihres Betätigungsmittels (52) in einer inaktiven Position der Betätigung des Spannmittels (51), und zwar in einer Position der Vakuumspannung der Klemme (5), wobei dieses Verriegelungsmittel (54) wenigstens ein Schließblech (540) und einen Riegel (541) umfasst, der eine Verriegelungsposition annimmt, in der dieser Riegel (541) mit einem solchen Schließblech (540) zusammenwirkt;
- ein Mittel (55) zum Steuern ihres Verriegelungsmittels (54), wobei dieses Steuereinrichtung (55) aus einem Schloss besteht, das einerseits eine Hülle (550), die fest relativ zu dem Körper (50) der Klemme (5) gelagert ist, andererseits einen Zylinder (551), der beweglich in der Hülle (550) gelagert und mit dem Verriegelungsmittel (54) in Eingriff ist, und noch andererseits ein einziges abnehmbares Steuerorgan (552) umfasst, das abnehmbar mit dem Zylinder (551) zusammenwirkt und den Riegel (541) des Verriegelungsmittels (54) steuert;
- das abnehmbare Organ zum Steuern (442) der Klemmeinrichtung (4) und das abnehmbare Organ zum Steuern (552) der Klemme (5) bestehen aus einem einzigen abnehmbaren Steuerorgan (442 ; 552) zur separaten und aufeinander folgenden Steuerung, einerseits, der Verriegelung des Mittels zum Verriegelen (43) der Klemmeinrichtung (4) in der Position des Spannens auf dem mit der Erde (2) verbundenen Element (20) und der Entriegelung des Mittels zum Verriegelen (54) der Klemme (5) und, andererseits, der Verriegelung des Mittels zum Verriegeln (54) der Klemme (5) in einer Position der Vakuumspannung und der Entriegelung des Mittels zum Verriegeln (43) der Klemmeinrichtung (4).

2. Vorrichtung (1) zum Erden nach Anspruch 1, **dadurch gekennzeichnet, dass** die Klemmeinrichtung (4) einerseits einen Klemmeinrichtungskörper (40), andererseits eine feste Spannbacke (410), mit der der Klemmeinrichtungskörper (40) versehen ist und die einen Teil der Mittel zum Spannen (41) der Klemmeinrichtung (4) bildet, und noch andererseits eine relativ zum Klemmeinrichtungskörper (40) bewegliche Spannbacke (411) umfasst, die den anderen Teil der Mittel zum Spannen (41) der Klemme (4) bildet.

3. Vorrichtung (1) zum Erden nach irgendeinem der vorhergehenden Ansprüche, **dadurch gekennzeichnet, dass** die Klemme (4) einerseits einen Klemmenkörper (50), andererseits eine feste Spannbacke (510), mit der der Klemmenkörper (50) versehen ist und die einen Teil der Mittel zum Spannen (51) der Klemme (5) bildet, und noch andererseits eine relativ zum Klemmenkörper (50) bewegliche Spannbacke (511) umfasst, die den anderen Teil der Mittel zum Spannen (51) der Klemme (5) bildet.

4. Vorrichtung (1) zum Erden nach Anspruch 3, **dadurch gekennzeichnet, dass** die Klemme (5) ein Mittel zur schwenkbaren Lagerung der beweglichen Spannbacke (511) auf dem Klemmenkörper (50) relativ zu der festen Spannbacke (510) umfasst, und dass diese bewegliche Spannbacke (511) durch Betätigung des Betätigungsmittels (52), welches die Klemme (5) umfasst, in Schwenkung gesteuert wird.

5. Vorrichtung (1) zum Erden nach Anspruch 3, **dadurch gekennzeichnet, dass** die Klemme (5) ein Mittel (53) zur translationsbeweglichen Lagerung der beweglichen Spannacke (511) auf dem Klemmenkörper (50) relativ zu der festen Spannbacke (510) umfasst und dass diese bewegliche Spannbacke (511) durch Betätigung des Betätigungsmittels (52), welches die Klemme (5) umfasst, in Translation gesteuert wird.

6. Vorrichtung (1) zum Erden nach Anspruch 5, **dadurch gekennzeichnet, dass** das Mittel (53) zur translationsbeweglichen Lagerung der beweglichen Spannbacke (511) aus einerseits einem Außengewinde (530), welches das Betätigungsmittel (52) umfasst, und andererseits einem Innengewinde (531), aus Zähnen oder dergleichen, welche die bewegliche Spannbacke (511) umfasst und mit dem Außengewinde (530) des Betätigungsmittels (52) zusammenwirken, besteht.

7. Vorrichtung (1) zum Erden nach irgendeinem der vorhergehenden Ansprüche, **dadurch gekennzeichnet, dass** das Mittel (42) zum Betätigen der Klemmeinrichtung (4) eine Gewindestange (420) umfasst, die einerseits translations- sowie drehbeweglich relativ zu einem dem Körper (40) der Klemmeinrichtung (4) zugeordneten Innengewinde (421) gelagert und andererseits mit mindestens einem Schließblech (430), welches das Mittel zur Verriegelung (43) der Klemmeinrichtung (4) umfasst, versehen und geeignet vorgesehen ist, um mit einem Riegel (431), welchen dieses Verriegelungsmittel (43) umfasst, zusammenzuwirken, und der über das einzige abnehmbare Steuerorgan (442) gesteuert wird.

8. Vorrichtung (1) zum Erden nach den Ansprüchen 2 und 7, **dadurch gekennzeichnet, dass** die Gewindestange (420) des Betätigungsmittels (42) ein freies Ende (422) umfasst, das die bewegliche Spannbacke (411) bildet, oder das ein, eine solche bewegliche Spannbacke (411) bildendes Organ aufnimmt.

9. Vorrichtung (1) zum Erden nach Anspruch 7, **dadurch gekennzeichnet, dass** das Mittel zum Betätigen (42) der Klemmeinrichtung (4) ein handbetätigtes Element (423), nämlich in der Form eines Hebels, einer Kurbel, eines Handgriffs, eines Knopfes oder dergleichen, für die Betätigung in Drehung der Gewindestange (421) dieses Betätigungsmittels (42) umfasst.

10. Vorrichtung (1) zum Erden nach irgendeinem der vorhergehenden Ansprüche, **dadurch gekennzeichnet, dass** das Mittel zum Betätigen (52) der Klemme (5) eine Gewindestange (520) umfasst, die einerseits translations- sowie drehbeweglich relativ zu einem dem Körper (50) der Klemme (5) zugeordneten Innengewinde (521) gelagert ist, und andererseits mit zumindest einem Schließblech (540) versehen ist, welches das Mittel zum Verriegeln (54) der Klemme (5) umfasst, das vorgesehen ist, um mit einem Riegel (541), welchen dieses Verriegelungsmittel (54) umfasst, zusammenzuwirken, und die über das einzige abnehmbare Steuerorgan (552) gesteuert wird.

11. Vorrichtung (1) zum Erden nach Anspruch 10, **dadurch gekennzeichnet, dass**:
- sie einen Ausleger (7) umfasst, der zumindest teilweise aus einem isolierenden Material hergestellt ist und im Bereich des einen seiner Enden (70) ein Mittel (71) zur Aufnahme der Klemme (5) umfasst;
- das Mittel zum Betätigen (52) der Klemme (5) ein Organ (522) zum Betätigen in Drehung seiner Gewindestange (520) umfasst, das die Form von wenigstens einem Mittel annimmt, das geeignet ist, mit einem ergänzenden Mittel, mit dem das Aufnahmemittel (71), welches der Ausleger (7) umfasst, versehen ist, zusammenwirken.

12. Vorrichtung (1) zum Erden nach einem der vorhergehenden Ansprüche, **dadurch gekennzeichnet, dass** das Mittel zum Steuern (44) der Klemmeinrichtung (4) einerseits das einzige abnehmbare Steuerorgan (442) umfasst und andererseits ausgestaltet und/oder angeordnet ist, um das Abnehmen dieses einzigen abnehmbaren Steuerorgans (442) nur in der Position der Verriegelung des Mittels zum Verriegeln (43) der Klemme (4) und in einer Position der Spannung dieser Klemmeinrichtung (4) auf dem mit der Erde (2) verbundenen Element (20) zu erlauben.

13. Vorrichtung (1) zum Erden nach irgendeinem der vorhergehenden Ansprüche, **dadurch gekennzeichnet, dass** das Mittel zum Steuern (55) der Klemme (5) einerseits das einzige abnehmbare Steuerorgan (552) umfasst und andererseits ausgestaltet und/oder angeordnet ist, um das Abnehmen dieses einzigen abnehmbaren Steuerorgan (552) nur in der Position der Verriegelung des Mittels zum Verriegeln (54) der Klemme (5) und in einer Position der Vakuumspannung dieser Klemme (5) zu erlauben.

14. Vorrichtung (1) zum Erden nach irgendeinem der vorhergehenden Ansprüche, **dadurch gekennzeichnet, dass** die Klemmeinrichtung (4) Mittel (45) umfasst, um ihres Verriegelungsmittel (43) in der entriegelten Position zu halten, und zwar bei einer Spannkraft des Spannmittels (41) auf dem mit der Erde (2) verbundenen Element (20), die niedriger als ein Nennwert ist.

15. Vorrichtung (1) zum Erden nach den Ansprüchen 7 und 14, **dadurch gekennzeichnet, dass** die Mittel (45), um ihres Verriegelungsmittel (43) in der entriegelten Position zu halten einerseits eine Hülse (450), die gleitend relativ zu dem Körper (40) der Klemmeinrichtung (4) gelagert ist und innen mit einem Innengewinde (421), um mit dem Außengewinde der Gewindestange (420), die wenigstens teilweise innerhalb dieser Hülse (450) positioniert ist, und andererseits ein Rückstellmittel (451), das zwischen der Hülse (450) und dem Körper (40) der Klemmeinrichtung (4) angeordnet ist und geeignet vorgesehen ist, um diese Hülse (450) aus dem Körper (40) der Klemmeinrichtung (4) und in eine Position des Spannens der Klemmeinrichtung (4) zu drücken.

16. Vorrichtung (1) zum Erden nach Anspruch 15, **dadurch gekennzeichnet, dass** die Hülse (450) eine Wand (452) umfasst, die mit einem Durchgangsloch (453) versehen ist, das einerseits gegenüber mindestens einem Schließblech (430), welches das Mittel zum Verriegeln (43) der Klemmeinrichtung (4) umfasst, angeordnet ist, und mit dem die Gewindestange (420) des Betätigungsmittels (42) versehen ist, und andererseits dazu vorgesehen ist, von einem Riegel (431) des Mittels zum Verriegeln (43) der Klemmeinrichtung (4) durchsetzt zu werden, um mit dem Schließblech (430) zusammenwirken, und zwar bei einer Spannkraft des Spannmittels (41) auf dem mit der Erde (2) verbundenen Element (20), die gleich einem Nennwert ist.

17. Vorrichtung (1) zum Erden nach irgendeinem der vorhergehenden Ansprüche, **dadurch gekennzeichnet, dass** die Klemme (5) Mittel (56), um ihr Spannmittel (51) auf einem elektrischen Leiter (30) geklemmt zu halten, umfasst, und zwar bei einer Spannkraft zumindest gleich einem Nennwert.

18. Vorrichtung (1) zum Erden nach den Ansprüchen 3, 10 und 17, **dadurch gekennzeichnet, dass** die Mittel (56), um das Spannmittel (51) geklemmt zu halten, einerseits eine Hülse (560), die gleitend relativ zu dem Körper (50) der Klemme (5) gelagert und innen mit einem Innengewinde (521) versehen ist, um mit dem Außengewinde der Gewindestange (520) des Betätigungsmittels (52) zusammenzuwirken, die wenigstens teilweise innerhalb der Buchse (560) positionniert ist, und andererseits ein Rückstellmittel, das zwischen der Hülse (560) und dem Körper (50) der Klemme (5) zwischengefügt und vorgesehen ist, um die bewegliche Spannbacke (511) in Richtung auf die feste Spannbacke (510) zu drücken.

## Claims

1. A device (1) for grounding an electrical conductor (30) of an overhead power line (3), namely a medium and high voltage line, including:
- a clamping fixture (4) provided with means (41) for its clamping on an element (20) connected to the ground (2) as well as means (42) for maneuvering this clamping means (41);
- a clamp (5) provided with means (51) for its clamping on an electrical conductor (30) as well as means (52) for maneuvering this clamping means (51);
- an electric cable (6) for connecting the clamp (5) to the clamping fixture (4), wherein:
- the clamping fixture (4) includes:
- means (43) for locking its maneuvering means (42) in an inactive position for maneuvering the clamping means (41), in a clamping position of the clamping fixture (4) on the element (20) connected to the ground (2), this means for locking (43) including at least one keeper (430) and one bolt (431) adopting a locking position, in which said bolt (431) cooperates with such a keeper (430);
- means (44) for controlling its locking means (43), this control means (44) being formed of a lock including, on the one hand, a sheathing (440) mounted fixed with respect to the body (40) of the clamping fixture (4), on the other hand, a cylinder (441) mounted movably inside the sheathing (440) and engaged with the locking means (43) and, yet on the other hand, a single removable control organ (442) cooperating removably with the cylinder (441) and controlling the bolt (431) of the locking means (43);
- the clamp (5) includes:
- means (54) for locking its maneuvering means (52) in an inactive position for maneuvering the clamping means (51), in an clamping position in empty state of the clamp (5), this means for locking (54) including at least one keeper (540) and one bolt (541) adopting a locking position, in which said bolt (541) cooperates with such a keeper (540);
- means (55) for controlling its locking means (54), this control means (55) being formed of a lock including, on the one hand, a sheathing (550) mounted fixed with respect to the body (50) of the clamp (5), on the other hand, a cylinder (551) mounted movably inside the sheathing (550) and engaged with the locking means (54) and, yet on the other hand, a single removable control organ (552) cooperating removably with the cylinder (551) and controlling the bolt (541) of the locking means (54);
- the movable organ for controlling (442) the clamp (4) and the movable organ for controlling (552) the clamp (5) are formed by a single movable control organ (442; 552) for controlling, separately and successively, on the one hand, the locking of the means for locking (43) the clamping fixture (4) in the clamping position on the element (20) connected to the ground (2) and the unlocking of the means for locking (54) the clamp (5) and, on the other hand, the locking of the means for locking (54) the clamp (5) in the clamping position in empty state and the unlocking of the means for locking (43) the clamping fixture (4).

2. The device (1) for grounding according to claim 1, wherein the clamping fixture (4) includes, on the one hand, a clamping fixture body (40), on the other hand, a fixed jaw (410), which the clamping fixture body (40) is provided with and constituting a part of the means for clamping (41) the clamping fixture (4) and, yet on the other hand, a jaw (411) movable relative to clamping fixture body (40) and constituting the other part of the means for clamping (41) the clamping fixture (4).

3. The device (1) for grounding according to any one of the preceding claims, wherein the clamp (4) includes, on the one hand, a clamp body (50), on the other hand, a fixed jaw (510), which the clamp body (50) is provided with and constituting a part of the means for clamping (51) the clamp (5) and, yet on the other hand, a jaw (511) movable relative to the clamp body (50) and constituting the other part of the means for clamping (51) the clamp (5).

4. The device (1) for grounding according to claim 3, wherein the clamp (5) includes means for pivotally mounting the movable jaw (511) on the clamp body (50) and relative to the fixed jaw (510) and wherein this movable jaw (511) is controlled in pivoting through actuating the maneuvering means (52) the clamp (5) includes.

5. The device (1) for grounding according to claim 3, wherein the clamp (5) includes means (53) for mounting in translation the movable jaw (511) on the clamp body (50) and relative to the fixed jaw (510) and wherein the movable jaw (511) is controlled in translation through actuating the maneuvering means (52) the clamp (5) includes.

6. The device (1) for grounding according to claim 5, wherein the means (53) for mounting in translation the movable jaw (511) is formed, on the one hand, by an external thread (530) the maneuvering means (52) includes and, on the other hand, by an internal thread (531), by teeth or the like the movable jaw (511) includes and which cooperate with the external thread (530) of the maneuvering means (52).

7. The device (1) for grounding according to any one of the preceding claims, wherein the means (42) for maneuvering the clamping fixture (4) includes a threaded rod (420), on the one hand, mounted in translation as well as in rotation with respect to an internal thread (421) associated with the body (40) of the clamping fixture (4) and, on the other hand, provided with at least one keeper (430) the means for locking (43) the clamping fixture (4) includes and designed so as to cooperate with a bolt (431) this locking means (43) includes and which is controlled by the single removable control organ (442).

8. The device (1) for grounding according to claims 2 and 7, wherein the threaded rod (420) of the maneuvering means (42) includes a free end (422) forming the movable jaw (411) or receiving an organ constituting such a movable jaw (411).

9. The device (1) for grounding according to claim 7, wherein the means for maneuvering (42) the clamping fixture (4) includes a hand-operated organ (423), namely in the form of a lever, a crank, a handle, a button or the like, for actuating in rotation the threaded rod (421) of this maneuvering means (42).

10. The device (1) for grounding according to any one of the preceding claims, wherein the means for maneuvering (52) the clamp (5) includes a threaded rod (520), on the one hand, mounted in translation as well as in rotation with respect to an internal thread (521) associated with the body (50) of the clamp (5) and, on the other hand, provided with at least one keeper (540) the means for locking (54) the clamp (5) includes, and designed so as to cooperate with a bolt (541) this locking means (54) includes and which is controlled by the single removable control organ (552).

11. The device (1) for grounding according to claim 10, wherein:
- it includes a pole (7), at least partially made of an insulating material and including, at the level of one of its ends (70), means (71) for receiving the clamp (5);
- the means for maneuvering (52) the clamp (5) includes an organ (522) for actuating in rotation its threaded rod (520) and adopting the form of at least one means capable of cooperating with complementary means the receiving means (71) the pole (7) includes is provided with.

12. The device (1) for grounding according to any one of the preceding claims, wherein the means for controlling (44) of the clamping fixture (4), on the one hand, includes the single removable control device (442) and, on the other hand, is designed and/or arranged so as to permit the removal of this single removable control organ (442) only in the locking position of the means for locking (43) the clamp (4) and in a clamping position of this clamp (4) on the element (20) connected to the ground (2).

13. The device (1) for grounding according to any one of the preceding claims, wherein the means for controlling (55) the clamp (5), on the one hand, includes the single removable control organ (552) and, on the other hand, is designed and/or arranged so as to permit the removal of this single removable control organ (552) only in the locking position of the means for locking (54) the clamp (5) and in a position of clamping in empty state of this clamp (5).

14. The device (1) for grounding according to any one of the preceding claims, wherein the clamping fixture (4) includes means (45) for maintaining its locking means (43) in the unlocked position, this for a clamping force of the clamping means (41) on the element (20) connected to the ground (2) lower than a nominal value.

15. The device (1) for grounding according to claims 7 and 14, wherein the means (45) for maintaining the locking means (43) in the unlocked position include, on the one hand, a sleeve (450) mounted slidably relative to the body (40) of the clamping fixture (4) and provided internally with an internal thread (421) for cooperating with the external thread of the threaded rod (420) at least partially positioned inside this sleeve (450) and, on the other hand, a restoring means (451) interposed between the sleeve (450) and the body (40) of the clamping fixture (4) and designed so as to push this sleeve (450) out of the body (40) of the clamping fixture (4) and in a clamping position of the clamping fixture (4).

16. The device (1) for grounding according to claim 15, wherein the sleeve (450) includes a wall (452) provided with a through hole (453), on the one hand, provided in front of at least one keeper (430) the means for locking (43) the clamp (4) includes, and which the threaded rod (420) of the maneuvering means (42) is provided with and, on the other hand, aimed at being crossed by a bolt (431) of the means for locking (43) the clamping fixture (4) for cooperating with the keeper (430), this for a clamping force of the clamping means (41) on the element (20) connected to the ground (2) at least equal to a nominal value.

17. The device (1) for grounding according to any one of the preceding claims, wherein the clamp (5) includes means (56) for maintaining the clamping means (51) tightened onto an electrical conductor (30), this with a clamping force at least equal to a nominal value.

18. The device (1) for grounding according to claims 3, 10 and 17, wherein the means (56) for maintaining the clamping means (51) tightened include, on the one hand, a sleeve (560) mounted slidably relative to the body (50) of the clamp (5) and provided internally with an internal thread (521) for cooperating with the external thread of the threaded rod (520) of the maneuvering means (52) at least partially positioned inside the sleeve (560) and, on the other hand, restoring means interposed between the sleeve (560) and the body (50) of the clamp (5) and designed so as to push the movable jaw (511) towards the fixed jaw (510).
